# EUROPEAN PATENT APPLICATION

(11) **EP 1 973 343 A1**
(43) Date of publication of application: **24.09.2008**
(21) Application number: 07251245.2
(22) Date of filing: 23.03.2007
(51) Int. Cl.: H04N 5/445, H04N 7/173

(54) **Gathering and using user preference data**

(71) Applicant: British Telecommunications Public Limited Company, London EC1A 7AJ (GB)
(72) Inventor: The designation of the inventor has not yet been filed
(74) Representative: Geffen, Nigel Paul

(57) **Abstract**

A method of depicting an ongoing relationship between a user and media content, including the steps of
- confirming existence of the ongoing relationship between the user and the media content, and
- graphically depicting the ongoing relationship by positioning a user identifier representing the user, in a position proximate to a content identifier representing the media content.

## Description

This invention relates to an apparatus and methods for gathering and depicting information about the preferences and interest levels of a user or a group of users in media content and types of media content.

Media content can take myriad forms and formats, and can be presented to a user in an increasingly varied number of ways. In the context of electronic and digital media alone, a user is courted by numerous providers and promoters of such media content via the television, the radio, the Internet and other computer networks. User interest in content - such as films, television or radio programmes, commercial advertisements - is often crucial to the commercial success or even survival of content providers, website owners, promoters and the like (which here shall for convenience be referred here to as "commercial entities" even though some such parties may not be wholly or even partly commercial in nature). Commercial entities thus expend much time and effort ensuring that their content is a good fit, or appropriate, to users' needs and requirements. Appropriateness could take the form of useful and interesting subject matter is presented in an attractive way to the user.

Two aspects of user interest are of particular interest: the first being the length of time spent by one particular user on a website or a webpage, as well as any return visits by that user, which is determined by a user's interest in, or "stickiness" of, the media content, and second, the number of users who visit a website, wherein each user is sometimes referred to an "eyeball" and each visit is a "hit". Both measurement criteria determine the extent of exposure and audience of advertising and media content on the website, as well as accuracy of targeted content ultimately resulting in sales.

Aside from simple mechanisms such as "hit counters" where the number of (anonymous) views of a website is counted, there exist more sophisticated mechanisms for capturing audience data. One such method of gathering such user preference and interest data often start with the generation of a profile of a possible typical user of the media content in question. Such user profiles generally comprise personal and demographic information (age, gender, race, economic status, etc.). Although this could be based on empirical and historical data, the initial generation of a user profile is necessarily guesswork, at least to a degree. The accuracy of the generated user profile can then be improved with data gathered through use of the media content, e.g. by the user volunteering information concerning his preferences and interest in the content or other matters.

The user profile thus created may then be linked by linking it to a specific piece, or general type, of media content by reference to the descriptor of the content e.g. by means of metadata associated and stored with either or both of the user profile and the content. Alternatively, a particular user's interest in a particular piece or type of content can be mapped, recorded and then stored in a separate database. Simple graphs can be generated with such data. Based on individual responses, a peer group, or "tribal" user profile may be similarly drawn up to capture and describe a group of individual users who seemingly share the same parameters or characteristics. Information about a user's or users' "tribal" allegiance is again valuable information for commercial entities, as this allows for content to be more generally targeted to a wider audience.

With such user preference and interest data, commercial entities such as television stations and website owners can calculate audience levels and types for purposes of attracting advertising revenue. The data is also used to judge the "efficiency" of the television programme or website: for example it might be found that one particularly weak webpage is less sticky than the others of the collection of pages making up a website. There are, of course any number of reasons for the success or failure of content with a certain user or tribe of users. The website operator may determine that the less-sticky webpage is less usable, that the information is poorly presented, or that the information is simply not of interest or being viewed by the correct audience. In any case sticky (or non-sticky) content, may share certain characteristics which decide its success or otherwise with a particular user or tribe of users. Such information may also be commercially useful to content providers to find out what may increase the stickiness of content with such user(s).

Such data indicative of successful content (in terms e.g. of subject, content, presentation) and customer satisfaction and loyalty is notoriously difficult to obtain, and the data when obtained may be of limited use, being unreliable, unfocussed, and possibly inaccurate. Once obtained, the data often quickly becomes obsolete.

Problems arise with poor quality information or metadata which may have been inaccurately generated in the first place, or which with time becomes inaccurate or simply wrong. The correctness of a user profile is greatly dependant on the initial profile ascribed by the designer of the system. Updating the user interest profile by taking into account the user's input is reactive in nature - and depends on the provision of correct, honest input. Any initial error in the profile information of the individual user is likely to be magnified upon extrapolation to generate tribal user preference data. As for content description metadata, these are often limited in application, because the information referred to often remains inflexibly fixed within the context in which they were initially generated or supplied by the user. So merely using the content metadata descriptor in a different way from the original method of capture or for a different purpose may result in inaccuracy or outright error.

Thus, information about apparent user interest in a certain piece, or type of, content may often be out of date, inaccurate or simply wrong, when used. Where the metadata or other information about one or both user and content is wrong, the mapping between them may not longer be relied upon. This adversely affects the successful targeting of any media content or advertising or other material based on the inaccurate or erroneous information.

There is thus a need for an improved method of capturing current and accurate data which maps user preference for or interest in particular media content. Once such data is captured, it would be advantageous to depict the results in a clear and quickly-understood manner, allowing a viewer to obtain ongoing (i.e. in real-time) and current information which is easy to interpret for data use. Ideally the depiction includes not just the user's interest in the content, but also about tribal preference and similarly of content types viewed by the user.

In a first aspect of the invention, there is provided a method of depicting an ongoing relationship between a user and media content, including the steps of
- confirming existence of the ongoing relationship between the user and the media content, and
- graphically depicting the ongoing relationship by positioning a user identifier representing the user, in a position proximate to a content identifier representing the media content.

The method in this aspect of the invention is directed to depicting in a graphical spatial model a relationship between a user and a piece of content i.e. while the user is consuming the content (or at any rate, has not navigated away from the content to another piece of content). The relationship here could refer to the level of interest shown by the user in the content, in terms of length of time spent with the content or some other measurable form of intensity of engagement such as when a user interacts with the content e.g. by pressing a voting button in response to a television programme. The relationship depicted by positioning identifiers respectively representing the user and the content, proximate to each other to visually express the relationship in graphical terms to a viewer.

In preferred embodiments, the relationship is measured so that changes in the relationship are measured and depicted. The depictions can be static snap-shots of ongoing relationships, or preferably they are dynamic representations wherein identifiers appear to move relative to each other as relationships change over time. The administrator of the spatial model can decide whether to depict only ongoing relationships, or to depict also historical data representing relationships which have since ended (in the sense e.g. that the user has navigated away from the content).

In a more complex version of this aspect of the invention, a number of relationships are depicted. These can be between a single user and number of pieces of media content, where the varying distances between the user identifier and the content identifiers graphically show the user's different levels of e.g. interest or interaction with different pieces of content. The proximity or otherwise of content identifiers to each other also depicts their relationship to each other: e.g. similarities (or differences) to each other in terms of subject matter, appeal, mood, ease of navigation and use, or the like.

Alternatively, the relationships could be between a single piece of content and multiple users, to show the varying level of interest by different users in that content as represented by the distances of the user identifiers to the content identifier. If some or all of the users are interested in the same content, it may be possible to draw from the proximity of the user identifiers that their relationship to each other is that they have the same tribal allegiance as far as that piece of content is concerned.

Where there are multiple users who are each interested in different content media, a viewer can obtain much useful data in seeing clusters of identifiers which depict user-content, user-user and content-content relationships.

In a further aspect of the invention, there are provided methods for gathering data about an ongoing relationship between a user and media content, a user and another user, and a piece of media content and another piece of media content, including the steps of the method as claimed below.

The depiction of relationships according to the invention, can itself generate further data. In one embodiment, there is no need for absolute data to be used to generate the spatial model, and so the model can depict relationships in purely relative terms while the user continues to have a relationship with the content. However in a preferred embodiment, it is possible to calculate approximate or even precise absolute data about the relationships between the user(s) and content, such as the length of time elapsed before a user navigated away from a piece of content. Thus, both relative and absolute data can be gathered from the spatial model where such data may not have previously existed. Preferably, such data gathered from the spatial model is used to generate and depict a user preference zone which clusters together related user(s) and content.

Further aspects of the invention in the form of apparatus and systems to carry out the methods of the invention are also provided.

In a yet further aspect, there is provided a user interface for presenting information about a plurality of media content to a user, the display being configured based on data about an ongoing relationship gathered according to the methods as claimed.

A user can, by viewing the spatial model, have a good idea of who and what else (users and content) have identifiers located in proximity to his identifier, signifying either a membership in a peer or tribal group, or else that content whose identifier is located near to his may be of interest. Alternatively, the user can use a user interface which takes the form of e.g. a bespoke television or programming guide which lists content in order of likely interest to the user. The listing is ordered according to the data generated by the spatial model, e.g. from the particular user's preference zone.

The invention will now be described, by way of example only, with reference to the drawings wherein:
Figure 1 shows how user preferences can be gathered though a voting mechanism,
Figure 2 shows how user preferences can be captured though content "stickiness",
Figure 3 is a representation of a spatial model of user preference zones for media content,
Figure 4 shows how user and content identifiers are positioned within the spatial model of Figure 3,
Figure 5 is a flow chart showing the process flow associated with the positioning of user and content elements as shown in figure 4.
Figure 6 is a representation of a layered approach to navigation between levels of detail based upon the spatial model of Figure 3,
Figure 7 is a representation of the output of the spatial model structured in a table based format,
Figure 8, is a representation of the spatial model in a three dimensional version, and
Figure 9 is a representation of a user interface utilising the output from the spatial model.

The system, apparatus and methods of the present invention seek to address the need to provide information about the current relationships between a user and media content, between users, and between content pieces or types, by capturing such data in a way which is not excessively complicated, together with means allowing intuitively-understood representation of the relationships.

### Capturing user interest or preference data

According to the invention, the data about the user's or users' preferences or interest level in a piece, or type, of content is first obtained or gathered.

In the invention, such data is gathered as the user is viewing or otherwise consuming the content e.g. a programme on a television set, or a website on the Internet via a personal computer.

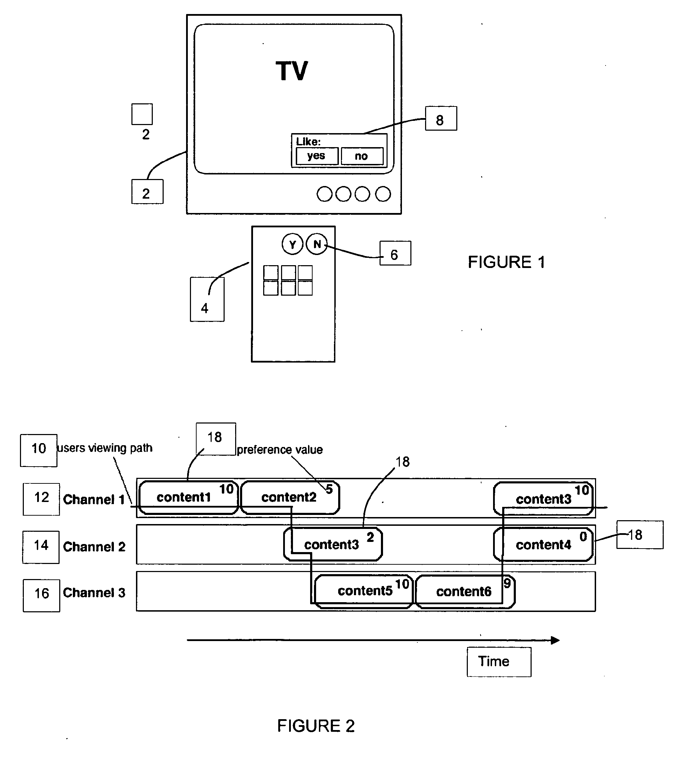

In a first embodiment of this aspect of the invention, users actively and manually make their preferences or interest levels known by voting if they like or dislike the content. The example discussed in Figure 1 is media content in the form of a programme viewed by the user on a television set (2), although the media content could take any other form presented on channels such as on a networked computer. As is conventional, the user can control various aspects of the television performance, such as power on/off, selecting television channels, adjusting sound volume, brightness etc. of the presentation, by using a remote control device (4) which communicates with the television set. In the invention, the user is additionally provided the capability to indicate his preference or interest level in the programme being watched. In the simple embodiment depicted in the drawing, two push "voting" buttons are provided on the remote control, which allow the user to indicate a simple "Yes"/"No" reaction to the programme, representing the user's like or dislike of the same. It is of course possible to provide more, or different types of input means for the user to indicate his preferences in more sophisticated or subtle ways, e.g. to vote for his liking for a programme on a scale, or the like to provide a weighted indication of interest level.

Upon making his vote, a signal is sent using conventional methods from the remote control to the television set, where the vote can be confirmed on the screen (8). The voting data is stored, either locally on the television set, reception device, or in a remote database which could be located anywhere, e.g. within the user's premises (e.g. on a computer networked to the television), or off-site such as on a commercial entity's database.

In a second embodiment of this aspect of the invention, users' interest or preference levels in, the media content are measured by recording the amount of time the programme elapses on one channel before the user switches away from the channel or in a VOD system the amount of elapsed time viewing one piece of content before switching to another piece of content. In an application of the invention in the context of a computer where a user is browsing websites on the Internet, this would be the amount of time elapsed before the user navigates away from the webpage and/or the website. An assumption may be made that time spent on a particular television channel or website indicates that the user is viewing or otherwise paying some attention to the content. This is a direct indication of the "stickiness" of the content. The systems of the invention can be set up to simply measure the time elapsed, starting from when the television channel is switched or when the new website appears on the user's computer monitor.

It is possible to store the raw time data as it is, or in a preferred embodiment to apply to it a weighted preference value so that e.g. where there is no channel change for the entire duration of a television programme, a full value of 10 out of 10 could be ascribed to it and stored in addition to, or in lieu of, the time data. Conversely where a channel is switched out of almost immediately after being switched into will be given a value of nil. Again, this data can again be stored locally or remotely.

Figure 2 depicts an example of a user's "viewing path" (10), wherein the user switches between television channels 1, 2 and 3 over time (t). Media content in the form of e.g. television programmes, commercials or the like are depicted within boxes (18). The user starts on channel 1 (12) and views the entirety of content1. For this user therefore, a preference value of 10 out of 10 is ascribed to content1. After the end of content1, the user stays on channel 1 but switches out half way through the transmission of content2 to channel 2 (14). Content2 is thus given a preference value of 5 out of 10, and so on through the viewing path.

Compared to the first data gathering method, this method is much less intrusive to the user's use and enjoyment of the media content. It is also less dependent on the user's cooperation to provide timely accurate feedback, as being an automated and objective process to measure time spent on a particular television channel or web location on the Internet. A greater level of granular detail can thus be achieved with less user disturbance.

The user preference data obtained by one or both methods can be continually refreshed to reflect the current profile of a typical consumer of the media content to ensure that the profile is up to date.

In a simple set up, the system of the invention is configured to gather user preference data on a particular piece of media content. The skilled person would realise that it is possible to classify the piece of content media so that other pieces of content can also be linked to the user's preference data. Thus, related content (e.g. instalments in a long-running television series, or individual web pages making up a website) and similar content (e.g. documentaries of Tudor England, or online bookshops run by different commercial entities) can usefully be linked to the user as part of his preference data. Thus a user who has expressed an interest in amazon.com may have in his preference data profile a reference also to barnesandnoble.com in that both websites are deemed to have the same "type" of media content.

Thus, instead of finding a match between user and content information, wherein one or both pieces of information may be wrong, the data is updated dynamically and during use or consumption of the content.

The methods for matching users to content can also be taken a stage further and forgo the use of content description metadata altogether. In this situation content matching to users would be based upon the use of virtual boundaries mathematically representing the level of interest a user has in a particular piece of content. Where these virtual boundaries cross over between users and content, simple selection processes can be used to expand the content profile for the users to include content which may be of interest to them based upon their piers viewing preferences.

The preference data can be stored and presented to commercial entities wishing to accurately target users with media content, advertising and the like, in a database or metadata form.

Alternatively another aspect of the invention allows for the data to be depicted and presented in a manner which is easily understood, dynamically and constantly updated, and which may also provide a rich source of information to commercial entities concerning group or user tribe preferences of media content.

In the prior art, such gathered information about user interest or preferences is typically stored as static data in databases or used in the tagging of content using metadata. In these cases, the data is typically obtained only when the user's consumption of the media content has ended. Thus, a user would only vote on a television programme only when it has finished, or the stickiness of a piece of content measured only (in terms of time elapsed) when the viewer has navigated away from the website or television channel.

It is a feature of the present invention that not only can a user's relationship with a certain piece of content be captured and depicted, but that this can be done on an ongoing basis i.e. while the user is still consuming the content, and further that any changes in the user's relationship with the content (e.g. the user's interest level and/or intensity of engagement has increased as indicated by his interacting with the television programme) can also be gathered and depicted in real time.

### Depicting user and content relationships

A method of depicting the data gathered using the methods discussed above will now be described. The skilled person will however appreciate that the following depiction method and apparatus is not restricted to use with data gathered as noted above, but also using conventional methods such as those referred to in the introduction to this specification above.

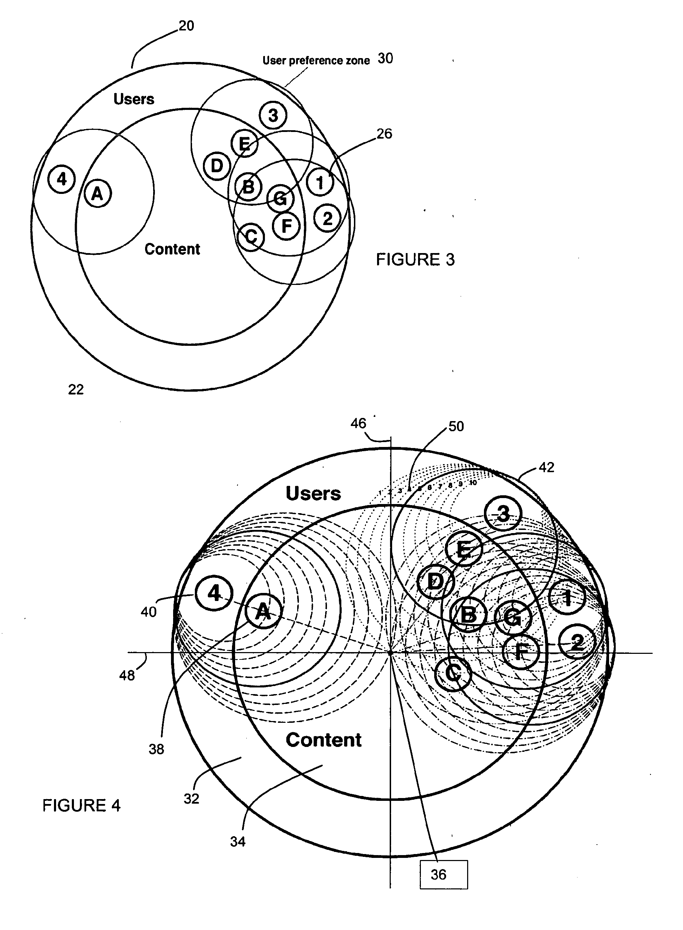

In Figure 3, a spatial model (20) represents the relationship of media content and users, including the preference levels of users concerning such content. In this embodiment, the spatial model includes two concentric zones, the outer (22) being the user zone and the inner (34) being the media content zone. The four users, depicted by user identifiers (26) here (1 to 4, located in the user zone) have access to various pieces or types of media content, depicted by content identifiers (28) (A to G in the content zone). Of course, users can alternatively be depicted in the inner zone and content depicted in the outer zone. The model also need not take a circular form, nor of concentric zones, as long as user and content identifiers can be depicted in positions relative to each other, which are indicative of the relationship between them, e.g. in the form of side-by-side bars representing the user and content zones.

The spatial model is a rich source of information allowing for the relationship linking users and content to be visually depicted according to user preference levels. In the example in the drawing, user 4 is deemed to have an interest in content A due to the location and proximity of user 4 to content A compared to e.g. content G, which is easily understood through the location of user and content in the model. Similarly, users 1 and 2 are deemed to have a greater user interest in content C, F and G than in content D or A, due to the relative proximity between each user and content. The locations of the user and content identifiers are positioned using methods described below in connection with Figure 4.

It is a feature of the invention that the location and position of the user and content identifiers in the zones of the spatial model provide a viewer a rich, intuitively-understood overview of the relative relationships between user and content, user and user, and content and content. As no absolute value data is required, there is no need for complicated and costly measurements of the user's exact interest level in the content (in terms of e.g. time elapsed since consumption started) to depict the relationship in the spatial model. In a simple embodiment of the invention, all that is required is that the system knows that the user is consuming the content as an ongoing matter. This permits a relationship to be graphically mapped and represented between the user identifier and the content identifier. As long as the user continues to consume the content, the identifiers continue to represent them on the spatial model: there are many way do e.g. by showing that the two identifiers do not move relative to each other to denote an ongoing relationship, or by decreasing the distance between the identifiers so that the content identifiers nearest to the user zone (22) can be understood to have been viewed the longest.

When the user navigates away from the content, the content identifier can either disappear from the screen, or else appear to float away from its previous proximal position to the user zone (22), at which point it can remain depicted or eventually disappear from the screen after a pre-determined period. In the latter case, it is possible to depict to the viewer some historical data about the user's previous relationship with the content. This historical data can be either displayed in a manner which makes clear to the viewer that the relationship is no longer ongoing (e.g. the icons or identifiers are dimmed or greyed out) and can be kept for as long as is desired. Alternatively the system can be set up so that such historical can be called up as needed, on the main screen or in a separate window.

The spatial model can additionally depict the relationship between users (e.g. in terms of whether two or more users have similar tribal allegiances as far as certain content is concerned), as well as between content (e.g. in the similarity of content in terms of its subject matter, presentation mode, tone and format, as far as certain users go). For example, users 1 and 2 in Figure 3 are located quite closely to each other within the user zone. This is due to their overlapping interest in content C, F and G, which can be generally mapped into a user preference zone (30). This location and position information can be quickly interpreted by a viewer (who is the user of the spatial model) to mean that users 1 and 2 could be part of a user interest group having similar likes and dislikes at least as far as content C, F and G is concerned. Users 1 and 2 might be seen to be members of a particular tribe which user 4 is not party to. As briefly discussed above, such information about tribal and peer preferences can be very useful to commercial entities' marketing activities. User-user relational information may be used also by the users themselves, to identify each other as having a common interest e.g. for social purposes, to make peer-to-peer recommendations, or the like. Such information may be captured using the spatial model of the invention, so that instead of having to draw up individual user or users' profiles e.g. by getting responses to questionnaires or surveys, user(s) can be defined by certain specific characteristics and like/dislikes discerned from their identifiers being in proximity with certain content identifiers.

In the same way, content identifiers (28) which are located in proximity to each other may share similar characteristics, such as subject matter, mode of presentation and so on. Again referring to Figure 3, content E, B, G and F for example, are all located near the periphery of the content zone (24). This may very swiftly be interpreted by a viewer to mean that they are of greater interest to users than is content C or D. Thus content E, B, G and F share the characteristic of being stickier than content C or D. Content C and F are of greater interest to user 2 than is content E. This may be an indication that the subject matter, presentation mode, etc. of content G and F are similar in a way which is relevant to user 2. Content-content relational information may be useful to content providers to analyse why certain content is of greater interest than others for longer periods of time, and how or why the subject or presentation of some sites is more attractive to certain users than others.

Here, user-user and content-content data (whether measured or otherwise) is not required to map those relationships in the model. The positions of the user and content identifiers are determined using only the interest level data obtained using e.g. the methods described in the "Capturing user preference data" described above. Valuable information about user-user and content-content relationships is a fortuitous incidental product of mapping user-content relationships.

In a more sophisticated embodiment of the invention, absolute value data about the various relationships can be displayed to the viewer. As noted above, the spatial model can be generated using various kinds of data, included measured data (e.g. intensity of engagement of the user with the content which could refer to the amount of time spent by the user on the media content, interaction and participation in activities related to the media content, or the like) or simple data like that from hit counters. Where such absolute data was not used to represent relationships in the spatial model, these values can be calculated from the relative positions of identifiers in the spatial model, using techniques such as those used to define the user preference zones (30) discussed below in connection with Figure 4, using a series of variable zoning bands (44) radiating out from the positions of the identifiers. Such valuable absolute data can be gathered from the spatial model, over and above its function to visually depict ongoing relationships.

In a further embodiment, data can be gathered from the spatial model to provide the viewer information about the nature of the relationships. For example, the spatial model can be configured to provide the viewer with absolute value data about the length of time elapsed before the user navigated away from the content. Tribe allegiances of two or more users could be detailed in terms of what the shared points of interest are. Content in visual proximity to each other in the spatial model could be described as being similar in content, presentation, target audience, backing music, or the like. Such relative data can be gathered from the spatial model, over and above its function to visually depict ongoing relationships.

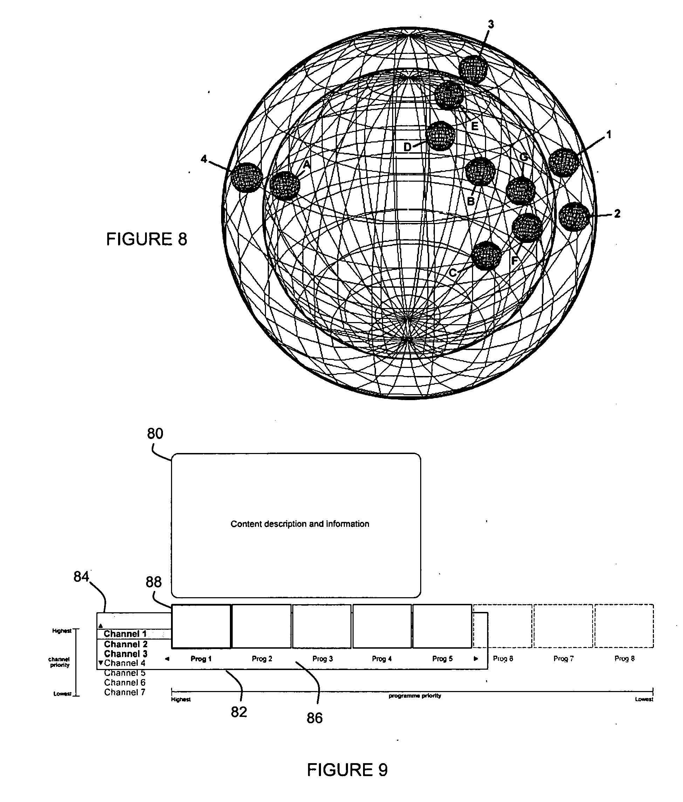

Unlike the data gathering method described above in connection with Figures 1 and 2, the data gathered from the spatial model is current, up-to-date, and unlikely to be dishonest or inaccurate (compared with e.g. the voting mechanism of Figure 1). Significantly, the data is captured in real time and can be used and analysed without having to wait until the relationship ends (compared with the voting method of Figure 1 or tracking the user's viewing path in Figure 2). The gathered data can be used in separate applications e.g. to support a user interface described in connection with Figure 9 below which is for a bespoke television programming guide.

This additional data can be displayed on the same screen as the spatial model. Alternatively the viewer can call up such information in a separate window or task bar or hover a mouse pointer over the relationship of interest. The skilled person would of course appreciate the many ways this aspect of the invention can be carried out.

In a simple embodiment of the invention, the spatial model presents a static snapshot of the relationships between users and content. In a preferred embodiment, a user's ongoing consumption of content is dynamically depicted, e.g. to show changes in the relationship between the users and content in or near real time, based on current user behaviour data. Methods of displaying changes in the relative positions of user and content identifiers are described below.

The spatial model thus provides to the viewer a rich, real-time representation of the relationship between users and content which can be easily understood. This can be contrasted with prior art methods where parties wishing to obtain the same information would have to look up databases, or else refer to embedded metadata, which provide static information captured only after the relationship has been established, or in some cases, end.

It is thought that the spatial model would be of interest to commercial entities wishing to find out about their target audience's preferences, as well as to find out how their content is faring in comparison with their competitors, and so on. However users may also find the spatial model to be of interest, e.g. as a social tool to find out who else is in their peer or tribal group, or as a means to discover new content that may be related to other users or content whose identifiers are located in proximity to theirs, and so on.

Examples of methods of positioning and re-positioning users and content in the spatial model of Figure 3 will now be described with reference to Figure 4. The initial and/or subsequent positions of the user and content identifiers in the spatial model can be established either by mapping content identifiers to user identifiers, or user identifiers to content identifiers. In both Figures 3 and 4, user identifiers are the controlling elements to which content identifiers will be mapped.

First, a user is identified and then an identifier (26) defined for him and added to the user zone (22). Where there is more than one user, each has defined for him an identifier which is added to the user zone in e.g. a sequential order starting from either a random or predefined point within the zone. Next, the content which the, or each, user has consumed or is consuming is identified and a content identifier (28) defined for each. Each content identifier is then added to the content zone (24) of the spatial model and positioned by reference to the strength of its relationship to the user who had consumed or is consuming it. As shown in Figure 4, identifier positioning can be based upon ratings values using a virtual series of bands (44) which surround the user identifier. These rating value bands describe the strength of the relationship between two or more identifiers, wherein the band closest to the identifier (band 10) (50) signifies the greatest interest or strongest relationship, with the bands further away (band 1) (50) signifying diminishing in interest value or strength. In this embodiment of the invention, the centre point of the content zone (36) is deemed to be the point of least interest or weakest relationship to any user - since the users are all depicted to be located in the circumference of the content zone.

A content identifier can be positioned by placing it immediately in its "correct" band value position, or else be placed in a random place within the content zone which position may gradually change e.g. by appearing to float to its "correct" place. For example, a content identifier is positioned using a straight line path between the centre point of the content zone (36) and the centre of the associated user identifier. The content identifiers are then moved within the arc of the appropriate ratings band for the current user element in order to reposition the content element in relation to other user identifiers representing other users who have consumed or are consuming the content in question.

To position user identifiers subsequently added to the user zone, an initial checking process is used to see if any of the content the new user has consumed or is consuming is already represented within the content zone. If a match is found then the new user identifier is inserted in a relatively close proximity to such relevant user identifiers that also reference the same content identifiers. If a match is not found then the user identifier is placed in a location that is not in close proximity to the existing user identifiers.

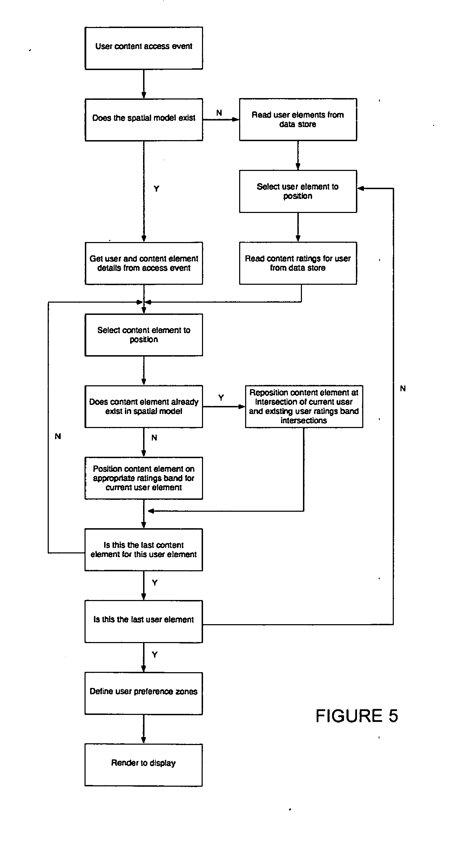

As part of the initial positioning process, it may also be necessary to recheck the positioning of content identifiers. This is performed by mapping a position based upon the centre point of the intersections of the appropriate ratings bands for those user identifiers which have a relationship with the affected content element. This user and content identifier positioning process is described in the flow chart of Figure 5.

Upon completion of the user and content identifier positioning process, it is then possible to define the user preference zones (30) - indicating a possible tribal relationship between users within the preference zone - which are based upon the selection of a suitable ratings band (44, 50). In Figure 4 the preference zones have been applied using the ratings band associated to the ratings value 5 (50), although any of the ratings bands can be selected as a pre-determined value to limit or widen the user preference zones as required.

In the embodiment depicting relationship changes in real time, user and content identifiers are shown to the viewer to be moving relative to each other depending on changing interest levels. So for example, as users start to consume new content, new content identifiers (28) can appear on the display apparatus. Equally, representations of content which the user has finished consuming, or which was consumed more than a pre-determined time ago, could fade or disappear from the screen. Depictions of new users via new user identifiers (26) could similarly be added or removed from the spatial model.

Changes to the model based upon differences in content ratings values for users or through the removal of users or content identifiers, are reflected within the spatial model in a manner appropriate to the method being used to render such changes to the output device. The methods used to display real time changes within the data can be based upon a number of techniques including but not limited to the following:
- Snapshots
   These are used to take a complete image of the dataset based upon its state at the time when the snapshot is taken. The snapshot is stored and can be used at a later date if required, subsequent snapshots do not replace existing versions.
- Fixed refresh rate
   Either using a full dataset or just changes in the data since the previous dataset, the refresh rate method uses a fixed clock to determine the rate at which the dataset information is sent to the rendering engine. At each refresh interval the preceding data set is either fully overwritten.or updated with data as per the current state at the time of the refresh.
- Display refresh upon changes in data
   This method is a true real time approach and passes any changes in the dataset to the rendering engine whenever the changes are made.

As positions of the user and content identifiers move within the spatial model relative to each other based on changes in the relationship between user and content representing e.g. user interest levels, the positions of the user identifiers and/or the content identifiers will, between themselves, also change. Changes in these positions in the spatial model will represent to the viewer corresponding changes in the user-user and/or content-content relationships.

For illustrative purposes, the spatial model of Figure 3 depicts only a few user and content identifiers. In practice however, it may be anticipated that a spatial model will be populated with a great many more user and content identifiers, which could crowd the model and affect the ease of view. Thus in a preferred embodiment, the spatial model is able to provide viewers with different levels of detail according to different needs.

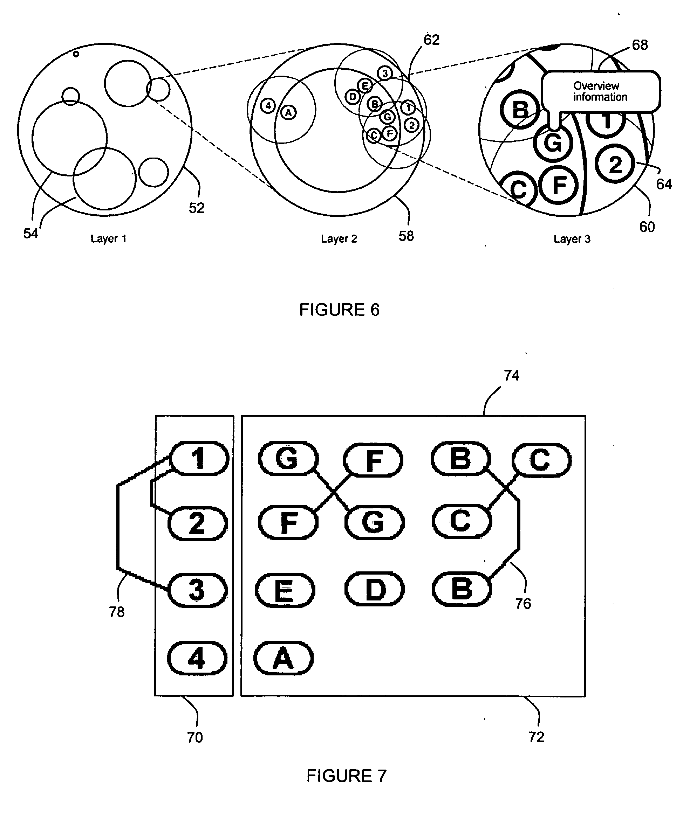

Figure 6 depicts a preferred embodiment of the spatial model of Figure 3. Here, a user interface incorporating the spatial model allows views of varying levels of detail of data contained in the spatial model. The spatial model in this figure includes three "layers", each representing a level of detail, which are applied to the model as an interface overlay on top of the real time information, although any number of layers can be defined and provided.

Layer 1 (52) is a high level overview layer indicating the state of major user groups or content genres, and indicates the commonality of these areas by the proximity to each other, the size of the areas (54) within the display represents the number of user/content elements within each group relative to the other groups.

Layer 2 (58) is the spatial model as depicted in Figure 3 and as described above. This layer is reached from layer 1 by the user selecting one of the user/content group areas (56) within layer 1 which is then magnified in order to show the level of detail as shown here within layer 2. This method of magnifying the area of interest can either be supported as a true magnification of information contained within a specific area, or as a virtual magnification which instead switches between different layers of information providing increasing levels of detail.

Layer 3 (60) depicts detail within one of the user preference zones (30) of layer 2 in the form of a magnified view. The layer 3 display offers greater visibility of the users (26) and content (28) within the zones, and also provides detailed information for each of the users or content which in this depiction is provided within a floating information element (68) when the user highlights any of the user or content elements within the layer e.g. by a mouse click selection or by hovering the mouse over the identifier. In a further or alternative embodiment, the relationship between user-content, user-user and/or content-content may also be depicted in this view e.g. by a line linking the identifiers, which a viewer could select to find out more about the nature of the relationship e.g. in terms of time elapsed for content stickiness.

As noted above, the spatial model of the invention is not restricted to the representation of Figure 3. Figure 6 is an alternative depiction of the same data as that depicted in the concentric spatial model of Figure 3, comprising a grid. In this example the user zone (70) is ordered vertically with the content zone (72). The ordering of the content identifiers is based upon the same principle in the spatial model of Figure 3, in that content identifier closest (74) to the user identifiers is of greater interest to the particular user. Content identifiers are of decreasing interest to uses the further they are from the border between the user and content zones. The relationship between user-user (78) and/or content-content (76) may also be depicted in this view e.g. by a line linking the identifiers

As represented in Figure 8 the spatial model could also take a three dimensional form where a third axis can either be used to increase the volume of the area used to layout the user and content elements, or alternatively to depict data of an additional parameter which can be applied to the user-user, user-content, and/or content-content relationship depiction. In Figure 8, the two dimensional circular zones and layers have been converted into three dimensional spherical zones. The skilled person would appreciate that the third axis would not need to take this form and could take a form which best reflects the use the additional axis is being applied to.

### Using relationship data of the spatial model

An example of how the relationship data depicted and generated by the spatial model of the invention can be used will now be discussed with reference to Figure 8. As discussed above, a user can have access to the spatial model itself to see who (users) and what (content) else is depicted as being "close" to him. Here, the relative (or absolute) relationship data, including information about the user's preference zone, from the spatial model can be used to create a separate, user-specific user interface and television programme guide, which is a list of content personalised to the user in that each piece of content is ordered by the user's possible interest level in the same. In this example, the location and position of content identifiers representing not just the specific piece of content but also its subject matter, genre, presentation mode, etc., is used to prioritise the content (in the form of television programmes) and television channels in order to better tailor the user interface to the users' content requirements.

In this embodiment, the user interface consists of an information area (80) and a navigation section (82) used by users to select content from the available content pool. The navigational display is broken down into two sections representing two forms of axial movement. The vertical controls enable the user to browse through a list of channels, content categories, genres, or similar classification types used to separate content into groups (84). Horizontal navigation is performed upon the programmes/content (86) contained within the uppermost group visible in the vertical menu. The programme/content menu is therefore updated whenever the group menu is stepped through in order that the programme/content menu shows the correct contents for the group item currently selected at the top of the group menu list.

Unlike cursor based TV programme guides this interface does not use a moving cursor to navigate to a particular piece of content, it instead uses a fixed selection window (88) with navigation of the content being applied by moving the group and programme/content lists so that the programmes virtually scroll behind the selection window. In effect this resembles a fixed cursor floating above a user controlled moving content menu.

This interface uses the design principle of navigating through the content data set using the physical metaphor of a book page. Navigation is performed by moving away from the top left corner of the data set (the first programme entry in the first group array set), this in effect gives precedence to content located top left with a diminishing importance to the user moving away from this point towards the right and bottom as the user needs to put more effort into reaching the lower fields of the data array. This bottom right corner relates to the last programme entry in the last group array data set, and represents content which is of least relevance and importance to the user as based upon the spatial zoning model.

User navigation of the interface is performed using a simple on screen or physical remote control featuring a number of controls enabling navigation on two axis (up, down, and left, right), together with a selection control to select the required content for viewing.

The configurations as described above and in the drawing are for ease of description only and not meant to restrict the apparatus or methods to a particular arrangement or process in use. It will be apparent to the skilled person that various sequences and permutations on the methods and apparatus described are possible within the scope of this invention as disclosed. For example, the invention is of particular application and usefulness when used in connection with television programmes or websites and web pages on the Internet, although the skilled person could also see the methods and apparatus of the invention being applied in other contexts. For example, data could be captured using conventional methods or as described above, about users' ongoing preferences, views and likes/dislikes as they consume the media content. Such media content data could include books as users read them, music being listened to over the radio or on the stereo in the living room or the car or bathroom, even for films as they are being viewed in the cinema, or for live performances such as concerts or plays at the theatre. Such data could form the basis for the generation of the spatial model of the invention, which itself could generate further valuable data for further and other uses.

## Claims

1. A method of depicting an ongoing relationship between a user and media content, including the steps of
- confirming existence of the ongoing relationship between the user and the media content, and
- graphically depicting the ongoing relationship by positioning a user identifier representing the user, in a position proximate to a content identifier representing the media content.

2. A method according to claim 1 further including a measurement step of measuring changes in a parameter of the ongoing relationship.

3. A method according to claim 2 wherein the measurement step comprises measuring duration of the ongoing relationship.

4. A method according to claim 2 or claim 3 wherein the measurement step comprises measuring changes in intensity of the ongoing relationship.

5. A method according to any preceding claim for depicting a plurality of ongoing relationships between a user and plurality of media content, wherein the step of graphically depicting the ongoing relationships include depicting an ongoing relationship between the plurality of media content.

6. A method according to any preceding claim for depicting a plurality of ongoing relationships between a media content and a plurality of users, wherein the step of graphically depicting the ongoing relationships includes depicting an ongoing relationship between the plurality of users.

7. A method according to any preceding claim for depicting a plurality of ongoing relationships between a plurality of users and a plurality of media content, wherein the step of graphically depicting the ongoing relationships includes depicting an ongoing relationship between the plurality of media content, and an ongoing relationship between the plurality of users.

8. A method according to any one of claims 2 to 7 wherein the step of graphically depicting the ongoing relationship includes depicting the changes in the ongoing relationship or relationships.

9. A method according to any preceding claim wherein the ongoing relationship between the user and the media content represents at least one of either an interest level of the user in the media content, or appropriateness the media content for the user.

10. A method according to any one of claims 6 to 9 wherein the ongoing relationship between the plurality of media content represents similarity or dissimilarity in content subject matter or presentation.

11. A method according to any one of claims 6 to 9 wherein the ongoing relationship between the plurality of users represents similarity or dissimilarity in tribal interests or preferences in media content.

12. A method according to any preceding claim wherein the step of graphically depicting the ongoing relationships is carried out using a graphical user interface on a screen.

13. A method according to any preceding claim wherein the media content is a television programme or an Internet website.

14. A method for gathering data about an ongoing relationship between a user and media content including the steps of the method of any one of claims 1 to 13.

15. A method for gathering data about an ongoing relationship between a user and another user including the steps of the method of any one of claims 1 to 13.

16. A method for gathering data about an ongoing relationship between a piece of media content and another piece of media content including the steps of the method of any one of claims 1 to 13.

17. A method according to any one of claims 14 to 16 further including a step of generating and depicting a user preference zone representing a relationship between a plurality of users and media content based on the gathered data.

18. A method according to any one of claims 14 to 16 wherein the gathered data comprises relative data about the ongoing relationship.

19. A method according to any one of claims 14 to 16 wherein the gathered data comprises absolute data about the ongoing relationship.

20. Apparatus for depicting an ongoing relationship between a user and media content, including
- means for confirming existence of the ongoing relationship between the user and the media content, and
- means for graphically depicting the ongoing relationship by positioning a user identifier representing the user, in a position proximate to a content identifier representing the media content.

21. Apparatus according to claim 20 further including means for measuring changes in a parameter of the ongoing relationship.

22. Apparatus according to claim 21 wherein the measurement means comprises means for measuring duration of the ongoing relationship.

23. Apparatus according to claim 21 or claim 22 wherein the measurement means comprises means for measuring changes in intensity of the ongoing relationship.

24. Apparatus according to any one of claims 20 to 23 for depicting a plurality of ongoing relationships between a plurality of users and a plurality of media content, wherein the means for graphically depicting the ongoing relationships also depicts ongoing relationships between the plurality of media content, and ongoing relationships between the plurality of users.

25. Apparatus according to any one of claims 20 to 24 wherein tne means for graphically depicting the ongoing relationship also depicts changes in the ongoing relationship or relationships.

26. Apparatus according to any one of claims 20 to 25 wherein the means for graphically depicting the ongoing relationships is configured to display a spatial model on a screen.

27. Apparatus according to claim 26 wherein the spatial model comprises a user zone for the user identifier and a media content zone for a media content identifier.

28. Apparatus according to claim 26 or claim 27 wherein the spatial model is configured to display various levels of detail pertaining to the ongoing relationship or relationships.

29. Apparatus according to any one of claims 20 to 28 wherein the ongoing relationship are depicted in two dimensions in the spatial model.

30. Apparatus according to any one of claims 20 to 28 wherein the ongoing relationship are depicted in three dimensions in the spatial model.

31. Apparatus according to any one of claims 20 to 30 wherein the spatial model provides a static view of the ongoing relationship.

32. Apparatus according to any one of claims 21 to 30 wherein the spatial model provides a dynamic view of changes in a parameter of the ongoing relationship.

33. Apparatus according to any one of claims 20 to 32 wherein the media content is a television programme or an Internet website.

34. A method for prioritising media content for consumption by a user based on a depiction of an ongoing relationship obtained by using the steps of a method according to any one of claims 1 to 19.

35. Apparatus for prioritising media content for consumption by a user based on a depiction of an ongoing relationship using apparatus according to any one of claims 20 to 34.

36. A system for gathering data about an ongoing relationship between a user and media content including the apparatus of any one of claims 20 to 34.

37. A system for gathering data about an ongoing relationship between a user and another user including the apparatus of any one of claims 20 to 34.

38. A system for gathering data about an ongoing relationship between a piece of media content and another piece of media content including the apparatus of any one of claims 20 to 34.

39. A system according to any one of claims 36 to 38 further including means to depict a user preference zone representing a relationship between a plurality of users and media content.

40. A system according to any one of claims 36 to 38 wherein the gathered data comprises relative data about the ongoing relationship.

41. A system according to any one of claims 36 to 38 wherein the gathered data comprises absolute data about the ongoing relationship.

42. A user interface for presenting information about a plurality of media content to a user, the display being configured based on data about an ongoing relationship gathered according to the method of any one of claims 14 to 19.

43. A user interface for displaying information about a plurality of media content to a user, configured to work with or including, the system of any one of claims 36 to 41.
